# EUROPEAN PATENT SPECIFICATION

(11) **EP 3 185 648 B1**
(45) Date of publication and mention of the grant of the patent: **15.04.2020**
(21) Application number: 16198354.9
(22) Date of filing: 11.11.2016
(51) Int. Cl.: H05B 6/62

(54) **APPARATUS AND METHOD FOR HEATING FOOD PRODUCTS**
VORRICHTUNG UND VERFAHREN ZUM ERWÄRMEN VON LEBENSMITTELPRODUKTEN
APPAREIL ET PROCÉDÉ DE CHAUFFAGE DE PRODUITS ALIMENTAIRES

(30) Priority: 23.12.2015 US 201562387243 P; 27.10.2016 US 201615335892
(43) Date of publication of application: 28.06.2017
(73) Proprietor: Illinois Tool Works, Inc., Glenview, Illinois 60025 (US)
(72) Inventor: BULLO, Marco, Glenview, Illinois 60025 (US); DUGHIERO, Fabrizio, Glenview, Illinois 60025 (US); GAMBATO, Francesco, Glenview, Illinois 60025 (US); LINTON, Joshua M., Glenview, Illinois 60025 (US)
(74) Representative: Trinks, Ole

(56) References cited:
- WO-A1-2011/061565
- CA-A1- 2 359 226
- JP-A- 2009 148 214
- US-A- 4 333 521

## Description

### CROSS-REFERENCE TO RELATED APPLICATIONS

This application claims priority to U.S. application number 62/387,243 filed December 23, 2015.

### TECHNICAL FIELD

This disclosure relates in general to the field of food treatment and preparation. Specifically, this disclosure relates to an apparatus and a method for heating food products, in particular for thawing and/or cooking food products.

### BACKGROUND

At present there are many known and widely-used techniques for heating a food product, both for thawing and for cooking.

According to some known heating techniques, the food product receives heat through its outer surface, which exchanges heat with an external heating element or with an external environment which is at a higher temperature. In these techniques, the flow of heat inside the food product is determined by the temperature gradient and by thermal diffusivity of the food product itself.

According to other known heating techniques, heat is generated directly inside the food product. Amongst these, some techniques use radio frequency (RF) dielectric heating and other techniques use microwaves (MW). Conventionally, radio frequency (RF) electromagnetic waves lie within the band of frequencies between 1 and 300 MHz, whilst microwaves (MW) lie within the band of frequencies between 300 MHz and 300 GHz.

Heating techniques that use radio frequency or microwaves are generally useful for achieving shorter thawing or cooking times than techniques that use heat exchange through the surface of the food product. However, a problem common to many of these types of known techniques relates to the difficulty of obtaining sufficiently uniform distribution of the temperature inside the food product. This problem normally seems to be more significant for microwave heating than radio frequency dielectric heating, although it also exists for the latter.

Therefore, it would be desirable to have available a heating technique, in particular using radio frequency dielectric heating, that allows a reduction in the non-uniformity of temperature distribution in the food product during heating thereof. Document US4333521 shows an apparatus for heating food according to the prior art.

### BRIEF SUMMARY OF SOME EXAMPLE EMBODIMENTS OF THE SUBJECT OF THE PRESENT DISCLOSURE

Specifically, this disclosure relates to an apparatus and a method that use a radio frequency dielectric heating technique to heat a food product. In particular example embodiments, heating of the food product is intended to thaw and/or to cook the food product. The invention is achieved with the features of an apparatus according to claim 1 and with a method according to claim 13. Dependent claims deal with preferred embodiments.

### BRIEF DESCRIPTION OF THE DRAWINGS

Having herein described the subject of this disclosure in general terms, further features and methods of use will become apparent in the following detailed description of some example embodiments, provided by way of example and without limiting the scope of the disclosure. Reference will be made to the appended figures, which are schematic drawings not necessarily to scale, in which:
- Figure 1: is a schematic side cross-section of a first example embodiment of an apparatus according to this disclosure;
- Figure 2: is a schematic side cross-section of a second example embodiment of an apparatus according to this disclosure;
- Figure 3: is a schematic side cross-section of a third example embodiment of an apparatus according to this disclosure;
- Figure 4: is a perspective view of an embodiment of a fluid container that can be used for an apparatus according to this disclosure; and
- Figure 5: is a block diagram of a control unit of an example embodiment for controlling certain operations of an apparatus according to this disclosure.

### DETAILED DESCRIPTION OF EXAMPLE EMBODIMENTS

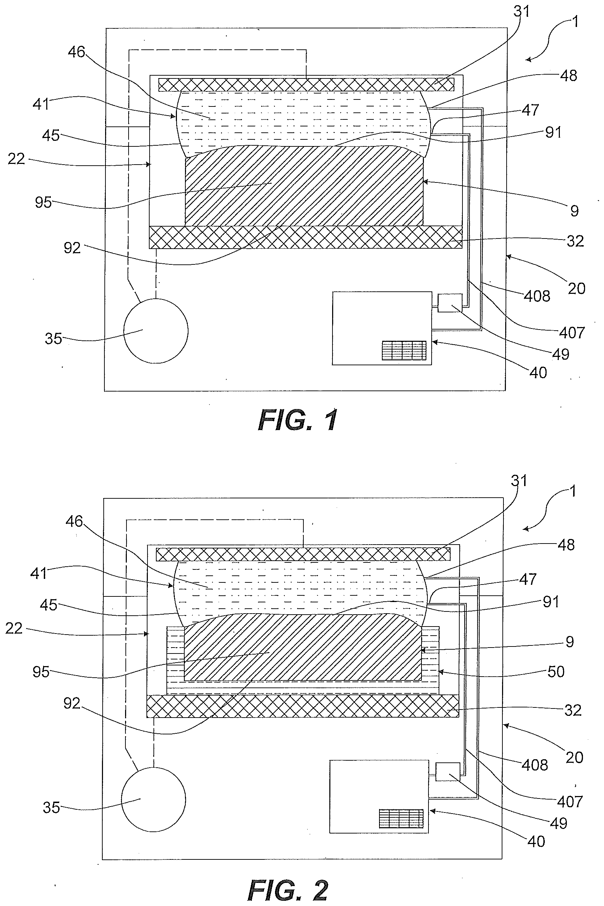

A first example embodiment of an apparatus according to this disclosure is labelled with the numeral 1 and is schematically illustrated in Figure 1.

Figure 1 shows several components of the apparatus 1 to make this description easier to understand. However, that figure should not be taken to be a precise and detailed technical drawing to be used for production purposes. Therefore, Figure 1 does not show all of the components of the apparatus 1 and shall not be considered to be a drawing in which the scale and proportions between the parts are faithfully reproduced. The same warnings also apply to the other appended figures.

The apparatus 1 may be used for heating a food product, for example a food, a dish, a piece of meat (in particular a chicken breast, chicken thighs or beef), a vegetable product. The food product is shown by way of example in the figures and is labelled 9. In particular, the food product 9 to be heated is a frozen (or deep-frozen) food product and the apparatus 1 can be used to thaw such a frozen food product 9. In some example embodiments, the apparatus 1 may be used to cook the food product 9.

The apparatus 1 comprises a supporting structure 20, which for example comprises a box-shaped casing and/or a framework that supports the other components of the apparatus 1. The apparatus 1 also comprises a treatment zone 22 which is designed to receive at least one food product 9 to be heated. For example, the treatment zone 22 is a treatment chamber that is located inside the supporting structure 20. The apparatus 1 may comprise a door (not shown) that may alternatively be opened to allow access to the treatment zone 22 and closed to perform heating of the food product 9 in the closed treatment chamber.

The apparatus 1 comprises a radio frequency dielectric heating system, which is intended to heat the food product 9 that is received in the treatment zone 22. The radio frequency dielectric heating system comprises at least two electrodes 31, 32 which are positioned at the treatment zone 22.

In some embodiments, at least one of the two electrodes 31, 32 may be at least partly made of ferromagnetic material. In specific embodiments, both electrodes 31, 32 may be made of ferromagnetic material.

As shown in the example embodiments in the appended figures, the first electrode 31 and the second electrode 32 may be positioned on opposite sides of the treatment zone 22. The food product 9 can be received in the treatment zone 22 which is between the two electrodes 31, 32. Specifically, the first electrode 31 is an upper electrode, positioned at the top of the treatment zone 22, whilst the second electrode 32 is a lower electrode, positioned on the bottom of the treatment zone 22. In other possible example embodiments, the two electrodes may be positioned on the same side of the treatment zone 22 and therefore, during use, they may be on the same side of the food product 9.

The radio frequency dielectric heating system also comprises a device 35 for applying a variable electric potential difference between the electrodes 31, 32 with a frequency of between 1 MHz and 300 MHz. Therefore, during use of the apparatus 1, a variable electromagnetic field with that frequency may be generated between the electrodes 31, 32. In other words, the dielectric heating system can generate an electromagnetic field which passes through the food product 9 that is received in the treatment zone 22, thereby supplying energy to the food product 9. At least part of the energy associated with the electromagnetic field can be absorbed by the food product 9 and can be converted into thermal energy, in particular by means of vibrations of the molecules of the food product 9 which are stressed by that electromagnetic field.

In some embodiments, the device 35 is designed to apply a variable electric potential difference with a frequency of between 10 MHz and 100 MHz. In specific embodiments, that frequency has a value selected from the following values: 13.56 MHz; 27.12 MHz; 40.68 MHz. It should be noticed that such values correspond to the frequencies currently available for radio frequency industrial applications. However, other frequency values are possible.

In some embodiments, application of the variable electric potential difference between the electrodes 31, 32 can be carried out by keeping one of the two electrodes at ground potential and varying the potential of the other electrode. The choice of the electrode to be kept at the ground potential may depend on safety requirements of the apparatus 1 or on other requirements. For example, the electrode to be kept at the ground potential may be the lower electrode 32, whilst the electrode intended to have a variable potential may be the upper electrode 31.

As regards the intensity of the electromagnetic field, the corresponding electric field per unit of length may be, for example, in the range between 50 V/cm and 5 kV/cm. In some methods of use, the intensity of the electric field per unit of length in the food product 9 may be within the range between 50 V/cm and 200 V/cm. It should be noticed that the intensity of the electric field per unit of length depends on the electric permittivity of the medium in which the electric field is. For example, the food product 9 may have a relative electric permittivity in the range of between 3 and 13 when the food product 9 is frozen, whilst the food product 9 may have a higher relative electric permittivity (for example in the range between 40 and 70) when it is defrosted. The air in the treatment zone 22 may have a relative electric permittivity of approximately 1.

As shown in the appended figures, in some embodiments the electrodes 31, 32 may be plate-shaped, for example having the shape of a flat plate. Figure 1 shows a cross-section of the electrodes 31, 32 illustrating their thickness and their main dimension of extension. In some embodiments, plate-shaped electrodes 31, 32 can extend so that they substantially cover all of a respective face of the treatment chamber 22 or at least so that they delimit a space sufficiently larger than the space in which the food product 9 may be located. That is useful for attempting to obtain a substantial constancy of the electromagnetic field in the food product 9.

The apparatus 1 also comprises a temperature moderating system which, during use, can moderate the temperature of at least one surface of the food product 9 during heating by the radio frequency dielectric heating system.

In fact, it should be noticed that during radio frequency heating the surfaces of the food product 9 that are crossed by the electromagnetic field (in particular the surfaces 91, 92 facing one or the other of the electrodes 31, 32) tend to heat up faster than the core 95 of the food product 9.

The temperature moderating system is useful for preventing or at least reducing the difference in heating rate between at least one surface and the core 95 of the food product 9. That is useful for reducing the risk of the temperature of the at least one surface of the food product 9 becoming too high and possibly damaging the food product 9. For example, in the case of a frozen food product 9 it is possible to reduce the risk that the food product 9 will defrost at the surface and its temperature will reach temperatures even higher than 10°C (50°F), or that it may even cook at the surface, while the core 95 of the food product 9 is still frozen. In use, the temperature moderating system may be used to remove thermal energy or heat from the surface of the food product 9, thereby cooling the surface of the food product 9 or at least slowing the increase in the temperature of the surface.

In the embodiments illustrated in the figures, the temperature moderating system comprises at least one fluid container 41 that is intended to be interposed between one of said at least two electrodes and a surface 91 of the food product 9 that is received in the treatment zone 22. For example, the fluid container 41 is intended to be interposed between the upper electrode 31 (which in particular is the electrode 31 with variable potential) and the surface 91 that is facing towards the upper electrode 31. That is to say, the fluid container 41 may be positioned in an air space above the food product 9.

However, in other embodiments the fluid container may be interposed between the lower electrode 32 and a surface 92 of the food product 9 that is facing towards the lower electrode 32. That is to say, the fluid container may be positioned in an air space below the food product 9. In other embodiments, at least one electrode is at the side of the food product 9 and the fluid container may be positioned in an air space at the side of the food product 9.

The fluid container 41 may comprise an envelope or a wall 45 that houses an inner chamber or inner space 46 of the fluid container 41. The envelope or wall 45 may be provided with an infeed 47 and an outfeed 48 which respectively allow fluid to be introduced into and extracted from the inner space 46.

During use, the fluid container 41 may receive thermal energy from the surface 91 of the food product 9 and a fluid may be made to circulate in the inner space 46 of the fluid container 41, between the infeed 47 for introducing fluid and the outfeed 48 for extracting fluid. The circulation of the fluid in the inner space 46 of the fluid container 41 allows the removal of at least part of the thermal energy that the fluid container 41 receives from the surface 91 of the food product 9. Therefore, in one method of use the excess thermal energy on the surface 91 may be transferred out of the treatment zone 22 through the fluid that is made to circulate between the inside of the fluid container 41 in the treatment zone 22 and an environment outside of the treatment zone 22.

In other embodiments, the inner chamber 46 may have the shape of a coil, a spiral, concentric spirals or another shape which defines a path for the fluid that extends over a large surface area of the fluid container 41. In other embodiments, the inner chamber 46 may have partitions or other elements that allow the definition of or facilitate a predetermined path for the fluid in the inner chamber 46. These shapes or elements are useful for attempting to render uniform or at least reduce any differences in temperature between different points of the surface of the fluid container 41 that is facing towards the surface 91 of the food product 9.

The temperature moderating system may comprise a cooling unit 40 for cooling the fluid, designed to receive heated fluid and to supply cooled fluid. For this purpose, the cooling unit 40 is connected to the infeed 47 and to the outfeed 48 of the fluid container 41 by respective ducts 407, 408. The fluid container 41, the ducts 407, 408 and the cooling unit 40 may be part of a circuit for the fluid and in particular may define a closed circuit in which the fluid can circulate receiving thermal energy or heat in the fluid container 41 and releasing thermal energy or heat in the cooling unit 40. In use, the fluid taken from the fluid container 41, in which it helped to cool the surface 91 of the food product 9, may be cooled in the cooling unit 40 and be re-introduced into the fluid container 41.

The cooling unit 40 may be mounted in the supporting structure 20. In one embodiment, the cooling unit 40 may for example be a refrigerating unit.

In some embodiments, the cooling unit 40 may be designed to supply cooled fluid at a temperature of between -10°C (14°F) and +5°C (41°F). That is useful for producing an apparatus 1 intended to thaw a frozen food product 9. In a specific embodiment, the cooling unit 40 may be designed to supply cooled fluid at a temperature less than or equal to 0°C (32°F). In one method of use of the apparatus 1, thawing of a frozen food product 9 may be carried out in such a way that practically no part of the food product 9 exceeds a temperature of 4°C (39.2°F) while the food product 9 is treated by the apparatus 1.

The temperature moderating system may comprise a pump 49 (or a compressor) that is designed to force the circulation of a fluid in the inner space 46 of the fluid container 41. In some embodiments such as those illustrated in the figures, the pump 49 is part of a closed circuit that may also comprise the fluid container 41, the ducts 407, 408 and the cooling unit 40. In these embodiments, the pump 49 is designed to force a circulation of fluid in said closed circuit.

In some embodiments not shown, the temperature moderating system may operate with a circulation of disposable fluid, according to which new fluid at a suitable temperature is forced into the fluid container 41 through the infeed 47 and simultaneously heated fluid is discharged from the inner space 46 by means of the outfeed 48 without the fluid being sent back to the infeed 47.

In some embodiments, the envelope or wall 45 of the fluid container 41 may be flexible. That is useful, for example, for allowing the fluid container 41 to adapt to the shape of the surface 91 of the food product 9 in the treatment zone 22. In particular, the envelope or wall 45 may be made of flexible material, for example with at least one sheet of plastic material, for example, polyethylene or polypropylene. In some embodiments, the fluid container 41 may be bag-shaped, in particular having the form of a flexible bag. That is useful for allowing the fluid container 41 to adapt to the dimensions and shape of the food product 9 in the treatment zone 22, in particular as if the respective electrode were modelled on the surface (upper and/or lower) of the food product 9.

In some embodiments, the fluid container 41 may be intended to make contact with the surface 91 of the food product 9. That is useful for transferring thermal energy by conduction, with a suitable heat exchange coefficient between the food product 9 and the fluid container 41. However, in other embodiments the fluid container 41 may be positioned near to the surface of the food product 9, without contact being required on the entire surface.

In some embodiments the fluid container 41 may be fluid-tight (except for the passages through the infeed 47 and the outfeed 48) and it may prevent direct contact between the fluid contained in the inner volume 46 and the food product 9 in the treatment zone 22.

The fluid container 41 may be intended to fill a space between the electrode 31 and the surface 91 of the food product 9. For example, the fluid container 41 is intended to make contact both with the electrode 31 and with the surface 91 and therefore the air space (or air gap) between the electrode 31 and the surface 91 can be completely avoided. If the fluid has a relative electric permittivity that is greater than the relative electric permittivity of air, an at least partial elimination of the air space can be useful for increasing the efficiency of the heating.

The contact between the fluid container 41 and the electrode 31 (or at least their positioning close to one another) may be useful for cooling the electrode 31 during use. The thermal energy or heat that the fluid container 41 can receive from the electrode 31 may be at least partly removed by the fluid during the fluid circulation in the inner space 46.

In some embodiments, the electrode 31 is movable relative to the supporting structure 20, towards or away from the opposite side of the treatment zone 22, in that way adjusting a dimension of the treatment zone 22. In some embodiments in which the electrodes 31, 32 are on opposite sides of the treatment zone 22, the first electrode 31 and the second electrode 32 are separated from each other by a distance that is adjustable. These embodiments, in which a dimension of the treatment zone 22 is adjustable, are useful for adjusting the distance between the electrode 31 and the surface 91 of the food product 9 depending on the dimensions of the food product 9 and of the fluid container 41, in particular for promoting contact between the fluid container 41 and the surface 91 of the food product 9 and for promoting elimination of the air space.

In some embodiments, the fluid container 41 may extend in such a way that it covers substantially all of the respective surface of the electrode 31 or at least all of the respective surface 91 of the food product 9. That is useful for allowing temperature moderation directly on a large surface of the food product 9.

In some embodiments, the fluid that is contained and can circulate in the fluid container 41 is a liquid. In example embodiments the fluid may be selected from the following liquids: water; deionized water (in particular, distilled water); an alcohol (in particular, ethyl alcohol); ethylene glycol; polyethylene glycol; a mixture of water and alcohol; a mixture of water and ethylene glycol; a mixture of water and polyethylene glycol; a mixture of deionized water (in particular, distilled water) and alcohol; a mixture of deionized water (in particular, distilled water) and ethylene glycol; a mixture of deionized water (in particular, distilled water) and polyethylene glycol.

In other example embodiments, the fluid comprises mostly one of the above-mentioned liquids, for example the fluid is a mixture comprising one of said liquids and one or more other components, where said one of said liquids is present in a mass fraction greater than 50%.

In some embodiments, in particular in an example of an apparatus for thawing food products, the fluid may be or comprise water (even not deionized). For example, the fluid may be water mixed with at least one other substance (for example alcohol or salt) in a quantity such that it lowers the freezing point at least below -5°C (23°F).

The use of water that is not deionized (or a mixture of it) as the fluid circulating in the fluid container 41 during thawing of a food product 9 may be useful, for the following reasons. While the food product 9 is still frozen, the food product 9 may absorb a share of power of the electromagnetic field that is much greater than a share of power of the electromagnetic field that can be absorbed by the water in the fluid container 41. For example, the water in the fluid container 41 may absorb less than 20% of the power of the electromagnetic field.

That is useful for rapid thawing of the food product 9. When the food product 9 is partly defrosted or completely defrosted, its different physical state may cause a reduction in the share of power absorbed by the food product 9, whilst the water in the fluid container 41 may increase its share of absorbed power. Therefore, the overall power supplied by the dielectric heating system being equal, it is possible to slow the defrosting or slow the increase in the temperature of the food product 9. That is useful for reducing the risk of the temperature of the food product 9 exceeding a desired safety value, for example 4°C (39.2°F).

In some embodiments the fluid has a relative electric permittivity that is greater than or equal to 20. That is useful for increasing the efficiency of the apparatus 1 ensuring that the intensity of the electric field per unit of length in the space between the electrode 31 and the surface 91 of the food product 9 is comparable to the relative electric permittivity of the food product 9, or at least that the ratio of those relative electric permittivities is more advantageous than in the case in which said space is occupied by air. In some embodiments the fluid has a relative electric permittivity that is greater than the relative electric permittivity of the food product 9 to be heated.

In other possible example embodiments the fluid is different from the above-mentioned liquids. For example, a suitable fluid could be selected from the fluids that are liquids in the desired range of temperatures, that are non-toxic and have a relative electric permittivity with a value noticeably greater than the relative electric permittivity of air. In other example embodiments the fluid could be a gas.

As shown for example in the embodiment in Figure 1, the food product 9 may be rested directly on the lower electrode 32, which can therefore also act as a supporting plate for the food product 9 in the treatment zone 22.

In an alternative method of use illustrated for example in Figure 2, the apparatus 1 may comprise at least one pan 50 for containing the food product 9. The pan 50 may be rested on the lower electrode 32, whilst the upper surface 91 of the food product 9 is facing towards the upper electrode 31. The pan 50 may be at least partly made of electrically conductive material. When it is in contact with the lower electrode 32, the pan 50 can adopt the same potential as the lower electrode 32 and therefore it can operatively become part of the lower electrode 32.

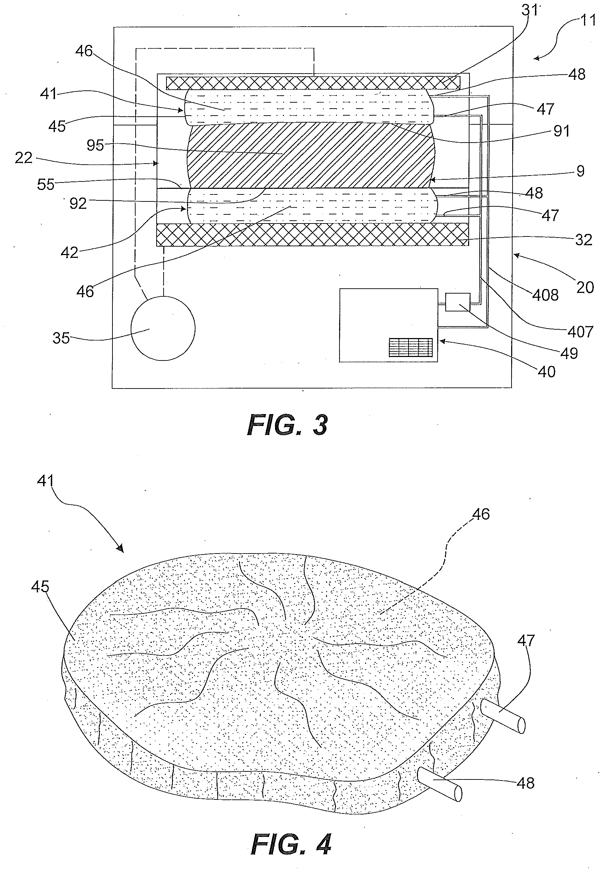

Another example embodiment of an apparatus according to this disclosure is labelled with the numeral 11 and is schematically illustrated in Figure 3. The same reference numbers as in the embodiment described above are used to indicate parts that are identical or similar or have a similar function, which are not described again in detail.

One difference between the apparatus 11 of Figure 3 and the apparatus 1 of Figure 1 is the fact that the temperature moderating system may also comprise a second fluid container 42, in addition to a first fluid container 41. Similarly to what has already been described above, the first fluid container 41 is intended to be interposed between a first electrode 31 and a first surface 91 of the food product 9. The second fluid container 42 is intended to be interposed between a second electrode 32 and a second surface 92 of the food product 9. The fluid can also be made to circulate in the inner space 46 of the second fluid container 42, to remove at least part of the thermal energy received from the second surface 92.

That is useful for moderating the temperature of both surfaces 91, 92 of the food product 9 which, facing the respective electrodes 31, 32, may be directly crossed or struck by the electromagnetic field and therefore are at more risk of an increase in temperature.

The second fluid container 42 may be substantially identical or similar to the first fluid container 41 and, in particular, may be connected to the same ducts 407, 408 that communicate with the cooling unit 40. Specifically, the fluid containers 41, 42 may be positioned in parallel in the fluid circuit.

In the embodiment shown for example in Figure 3, the first electrode 31 and the second electrode 32 are positioned on opposite sides of the treatment zone 22.

The first fluid container 41 and the second fluid container 42 may be intended to hold between them the food product 9 that is received in the treatment zone 22. For example, the fluid containers 41, 42 may be positioned in the air spaces above and below the food product 9.

In some embodiments, the apparatus 11 may comprise a grate or a plate 55 that is constrained to the supporting structure 20 and is positioned in the treatment zone 22 between the electrodes 31, 32. The grate or plate 55 may be used to support the food product 9, which can be rested on it. The second fluid container 42 may be positioned between the grate or plate 55 and the lower electrode 32. In other embodiments, the grate or plate 55 may not be present and the food product 9 may be rested directly on the fluid container 42, which can support it.

In some embodiments, the apparatus 11 may comprise at least one pan 50 for containing the food product 9. The pan 50 may be rested on the grate or plate 55 or on the second fluid container 42. The second fluid container 42 may be intended to be interposed between the lower electrode 32 and a bottom surface of the pan 50.

In some embodiments, the radio frequency dielectric heating system and/or the device 35 for applying the variable electric potential difference between the electrodes 31, 32 may operate under the control of a control unit. The control unit may control the application of heat to the food product 9 in accordance with fixed or dynamic heating protocols.

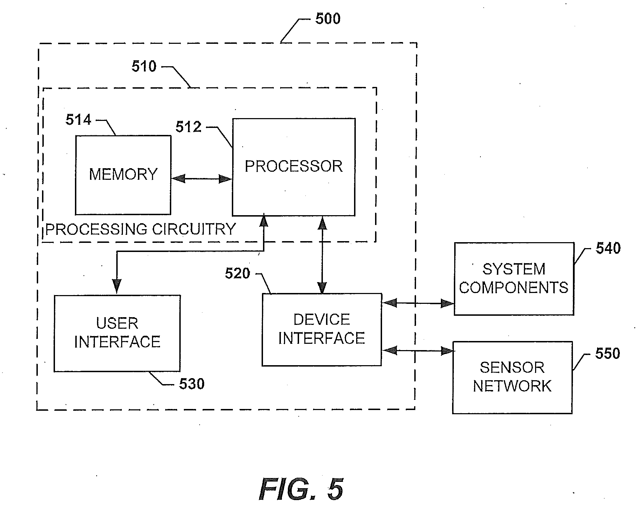

The temperature moderating system, or certain components thereof, may also or alternatively be operated under the control of a control unit in some cases. The control unit of the temperature moderating system may be the same or different from the control unit of the radio frequency dielectric heating system and/or the device 35 for applying the variable electric potential difference between the electrodes 31, 32 in various different embodiments. FIG. 5 illustrates a block diagram of a control unit 500, which could provide such control for the temperature moderating system (or components thereof) in some embodiments. However, it should be appreciated that the control unit of the radio frequency dielectric heating system and/or the device 35 for applying the variable electric potential difference between the electrodes 31, 32 may be similar in structure and form to the control unit 500, but may be programmed for different functionality.

As shown in FIG. 5, the control unit 500 may include processing circuitry 510 that may be configured to interface with, control or otherwise coordinate the operations of various components or modules described herein in connection with executing control over such component or modules as described herein. The control unit 500 may utilize the processing circuitry 510 to provide electronic control inputs to one or more functional units of the temperature moderating system to receive, transmit and/or process data associated with the one or more functional units and perform communications necessary to enable the ability to control operations of the temperature moderating system (or components thereof) as described herein.

In some embodiments, the processing circuitry 510 may be embodied as a chip or chip set. In other words, the processing circuitry 510 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The processing circuitry 510 may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry 510 may include one or more instances of a processor 512 and memory 514 (e.g., volatile or non-volatile memory) that may be in communication with or otherwise control a device interface 520 and a user interface 530. As such, the processing circuitry 510 may be embodied as a circuit chip (e.g., an integrated circuit chip) configured (e.g., with hardware, software or a combination of hardware and software) to perform operations described herein.

The device interface 520 may include one or more interface mechanisms for enabling communication with other devices. In some cases, the device interface 520 may be any means such as a device or circuitry embodied in either hardware, or a combination of hardware and software that is configured to receive and/or transmit data from/to devices or components (e.g., system components 540) in communication with the processing circuitry 510 via internal and/or external communication mechanisms. Accordingly, for example, the device interface 520 may further include devices and/or means for receiving data from one or more sensors of a sensor network 550. The sensor network 550 may include sensors to detect temperature (e.g., of the first and/or second fluid containers), distance (e.g., associated with the electrodes 31, 32), flow rate, pressure, or other parameters of interest associated with the temperature moderating system or components thereof (e.g., the system components 540).

In an example embodiment, the control unit 500 may enable intelligent control of various ones of the system components 540 either based on programmed control protocols, or based on dynamic control that is responsive to sensor data received from the sensor network 550. As an example, the temperature of the first and/or second fluid containers may be controlled based on sensor data. In one example, a sensor may be placed at an outlet of the first and/or second fluid containers (e.g., proximate to outfeed 48) so that the outlet temperature can be monitored. The control unit 500 may then operate the cooling unit 40 and/or pump 49 to maintain the outlet temperature at a desired temperature (or within a desired band). In some cases, the desired temperature may be held constant. However, in other examples, the desired temperature may be varied according to a pre-defined thawing protocol. Thus, for example, the control unit 500 may alternately sense temperatures and/or flow rates to control the same to achieve thawing in accordance with the pre-defined thawing protocol (which may be stored in the memory 514).

In another example embodiment, fluid flow rate through the cooling unit 40 and/or pump 49 may be controlled to correspondingly control the pressure of the first and/or second fluid container. Thus, the volume of the first and/or second fluid container can be modulated by the control unit 500 in accordance with a thawing protocol. The modulation of the volume of the first and/or second fluid container will correspondingly also modify the contact surface between the food product 9 and the first and/or second fluid container, respectively. The modulation of volume (and therefore also contact surface) can be programmatically controlled (e.g., via programs stored in the memory 514 and executed by the processor 512) alone or in combination with the temperature control described above. Other programmable modifications may also be employed either alone or in combination with these example modifications.

The subject matter of this disclosure may be modified and adapted in several ways without thereby departing from the scope of this disclosure. All details of the invention may be substituted with other technically equivalent elements and the materials used, as well as the shapes and dimensions of the various components, may vary according to requirements. It is therefore evident that the example embodiments described above are non-limiting and that other embodiments are possible, still being covered by the appended claims. Moreover, although the description and the drawings describe examples of combinations of elements and functions, it is evident that embodiments are possible that have different combinations of elements and functions, that in any case are covered by the teaching of this disclosure.

It should also be noticed that the advantages and benefits mentioned with reference to the example embodiments described above do not necessarily have to be present in all of the possible embodiments that are covered by the teaching of this disclosure. The specific terms used in the description are used with a generic and descriptive meaning, not with a limiting purpose.

## Claims

1. An apparatus (1) for heating food, comprising:
- a supporting structure (20) ;
- a treatment zone (22) which is designed to receive at least one food product (9) to be heated;
- a radio frequency dielectric heating system;
- a temperature moderating system for moderating the temperature of at least one surface (91, 92) of the food product (9) during heating;
wherein the radio frequency dielectric heating system comprises at least two electrodes (31, 32) positioned at the treatment zone (22) and a device (35) for applying a variable electric potential difference between the electrodes (31, 32) with a frequency of between 1 MHz and 300 MHz, the radio frequency dielectric heating system being intended, during use, to supply energy to the food product (9) to heat said food product (9) that is received in the treatment zone (22); wherein the temperature moderating system comprises at least one fluid container (41, 42),
**characterized in that**
the fluid is or mostly comprises a liquid selected from a group comprising:
water, deionized water or distilled water, an alcohol, ethylene glycol, polyethylene glycol, a mixture of water and alcohol; a mixture of water and ethylene glycol; a mixture of water and polyethylene glycol; a mixture of alcohol and deionized water or distilled water, a mixture of ethylene glycol and deionized water or distilled water, a mixture of polyethylene glycol and deionized water or distilled water,
that the fluid container (41, 42) is intended to be interposed between one of said at least two electrodes (31, 32) and a surface (91, 92) of the food product (9) received in the treatment zone (22), said at least one fluid container (41, 42) comprising an flexible envelope or flexible wall (45) that houses an inner space and is provided with an infeed (47) and an outfeed (48) for the fluid;
wherein, during use, the at least one fluid container (41, 42) receives thermal energy from the surface (91, 92) of the food product (9), the fluid circulating in the inner space of the at least one fluid container (41, 42) between the infeed (47) and the outfeed (48) for removing at least part of the thermal energy received.

2. The apparatus according to claim 1, wherein the temperature moderating system comprises a cooling unit (40) for cooling the fluid, the cooling unit (40) being designed to receive heated fluid and to supply cooled fluid, the cooling unit being connected to the infeed (47) and the outfeed (48) of the at least one fluid container (41, 42) by ducts (407, 408), wherein the fluid container (41, 42), the ducts and the cooling unit (40) are part of a circuit for the fluid.

3. The apparatus according to claim 2, wherein the cooling unit (40) is designed to supply cooled fluid at a temperature of between -10°C and +5°C.

4. The apparatus according to one of the preceding claims, wherein the temperature moderating system comprises a pump (49) designed to force a circulation of fluid in the inner space of the at least one fluid container (41, 42).

5. The apparatus according to one of the preceding claims
wherein the fluid container (41, 42) is bag-shaped.

6. The apparatus according to one of the preceding claims, wherein the fluid container (41, 42) is intended to make contact with the surface (91, 92) of the food product (9), and/or
wherein the fluid container (41, 42) is intended to fill a space between the one of said at least two electrodes (31, 32) and the surface (91, 92) of the food product (9).

7. The apparatus according to one of the preceding claims, wherein a distance between the one of said at least two electrodes (31, 32) and the surface (91, 92) of the food product (9) is adjustable.

8. The apparatus according to one of the preceding claims, wherein the temperature moderating system comprises a first fluid container (41) and a second fluid container (42), the first fluid container (41) being intended to be interposed between a first one (31) of said at least two electrodes (31, 32) and a first surface (91) of the food product (9), the second fluid container (42) being intended to be interposed between a second one (32) of said at least two electrodes (31, 32) and a second surface (92) of the food product (9),
wherein the first electrode (31) and the second electrode (32) are positioned on opposite sides of the treatment zone (22), the first fluid container (41) and the second fluid container (42) being intended to hold between them the food product (9) that is received in the treatment zone (22).

9. The apparatus according to one of the preceding claims, wherein a first one (31) of said at least two electrodes (31, 32) and a second one (32) of said at least two electrodes (31, 32) are positioned on opposite sides of the treatment zone (22),
wherein the first electrode (31) and the second electrode (32) are separated from each other by a distance that is adjustable.

10. The apparatus according to one of the preceding claims, wherein the fluid has a relative electric permittivity that is greater than or equal to 20.

11. The apparatus according to one of the preceding claims, wherein the device (35) for applying a variable electric potential difference between the electrodes (31, 32) is designed to apply a variable electric potential difference with a frequency of between 10 MHz and 100 MHz.

12. The apparatus according to one of the preceding claims, wherein the apparatus is an apparatus for thawing a frozen food product (9).

13. A method for heating a food product (9), wherein the food product (9) is subjected to heating by an electromagnetic field having a frequency of between 1 MHz and 300 MHz, at least one surface (91, 92) of the food product (9) being crossed by the electromagnetic field, wherein, during heating of the food product (9), thermal energy is transferred from said at least one surface (91, 92) of the food product (9) to a fluid that circulates inside a fluid container (41, 42) positioned near to or in contact with the at least one surface (91, 92) of the food product (9), **characterised in that** the fluid is or mostly comprises a liquid selected from a group comprising: water, deionized water or distilled water, an alcohol, ethylene glycol, polyethylene glycol, a mixture of water and alcohol; a mixture of water and ethylene glycol; a mixture of water and polyethylene glycol; a mixture of alcohol and deionized water or distilled water, a mixture of ethylene glycol and deionized water or distilled water, a mixture of polyethylene glycol and deionized water or distilled water,
wherein said at least one fluid container (41, 42) comprising an flexible envelope or flexible wall (45) that houses an inner space and is provided with an infeed (47) and an outfeed (48) for the fluid.

14. The method according to claim 13, wherein fluid taken from the fluid container (41, 42) is cooled in a cooling unit (40) and re-introduced into the fluid container (41, 42) and wherein the food product (9) to be subjected to heating is a frozen food product (9).

## Patentansprüche

1. Einrichtung (1) zum Erwärmen von Lebensmitteln, Folgendes umfassend:
- eine Stützstruktur (20);
- eine Bearbeitungszone (22), die dazu ausgestaltet ist, mindestens ein zu erwärmendes Lebensmittelerzeugnis (9) aufzunehmen;
- ein System zur dielektrischen Erwärmung mittels Hochfrequenz;
- ein temperaturabschwächendes System zum Abschwächen der Temperatur von mindestens einer Oberfläche (91, 92) des Lebensmittelerzeugnisses (9) während des Erwärmens;
wobei das System zur dielektrischen Erwärmung mittels Hochfrequenz mindestens zwei Elektroden (31, 32), die an der Bearbeitungszone (22) positioniert sind, und eine Vorrichtung (35) zum Aufbringen einer variablen elektrischen Potentialdifferenz zwischen den Elektroden (31, 32) mit einer Frequenz von zwischen 1 MHz und 300 MHz umfasst, wobei beabsichtigt ist, dass das System zur dielektrischen Erwärmung mittels Hochfrequenz während der Verwendung dem Lebensmittelerzeugnis (9) Energie zuführen soll, um das Lebensmittelerzeugnis (9), das in der Bearbeitungszone (22) aufgenommen ist, zu erwärmen; wobei das temperaturabschwächende System mindestens einen Fluidbehälter (41, 42) umfasst, **dadurch gekennzeichnet, dass**
das Fluid hauptsächlich eine Flüssigkeit umfasst oder eine solche ist, die ausgewählt ist aus einer Gruppe, die Folgendes umfasst: Wasser, demineralisiertes Wasser oder destilliertes Wasser, einen Alkohol, Ethylenglykol, Polyethylenglykol, eine Mischung aus Wasser und Alkohol; eine Mischung aus Wasser und Ethylenglykol; eine Mischung aus Wasser und Polyethylenglykol; eine Mischung aus Alkohol und demineralisiertem Wasser oder destilliertem Wasser, eine Mischung aus Ethylenglykol und demineralisiertem Wasser oder destilliertem Wasser, eine Mischung aus Polyethylenglykol und demineralisiertem Wasser oder destilliertem Wasser,
dass beabsichtigt ist, dass der Fluidbehälter (41, 42) zwischen einer der mindestens zwei Elektroden (31, 32) und einer Oberfläche (91, 92) des in der Bearbeitungszone (22) aufgenommenen Lebensmittelerzeugnisses (9) angeordnet werden soll, wobei der mindestens eine Fluidbehälter (41, 42) eine flexible Hülle oder eine flexible Wand (45) umfasst, die einen Innenraum beherbergt und mit einem Zulauf (47) und einem Ablauf (48) für das Fluid bereitgestellt ist;
wobei der mindestens eine Fluidbehälter (41, 42) während der Verwendung Wärmeenergie von der Oberfläche (91, 92) des Lebensmittelerzeugnisses (9) aufnimmt, wobei das Fluid im Innenraum des mindestens einen Fluidbehälters (41, 42) zwischen dem Zulauf (47) und dem Ablauf (48) zirkuliert, um mindestens einen Teil der aufgenommenen Wärmeenergie zu entfernen.

2. Einrichtung nach Anspruch 1, wobei das temperaturabschwächende System eine Kühleinheit (40) zum Kühlen des Fluids umfasst, wobei die Kühleinheit (40) dazu ausgestaltet ist, erwärmtes Fluid aufzunehmen und gekühltes Fluid zuzuführen, wobei die Kühleinheit mit dem Zulauf (47) und dem Ablauf (48) des mindestens einen Fluidbehälters (41, 42) durch Leitungen (407, 408) verbunden ist, wobei der Fluidbehälter (41, 42), die Leitungen und die Kühleinheit (40) Teil eines Kreislaufs für das Fluid bilden.

3. Einrichtung nach Anspruch 2, wobei die Kühleinheit (40) dazu ausgestaltet ist, gekühltes Fluid bei einer Temperatur von zwischen -10 °C und +5 °C zuzuführen.

4. Einrichtung nach einem der vorhergehenden Ansprüche, wobei das temperaturabschwächende System eine Pumpe (49) umfasst, die dazu ausgestaltet ist, eine Zirkulation von Fluid im Innenraum des mindestens einen Fluidbehälters (41, 42) zu erzwingen.

5. Einrichtung nach einem der vorhergehenden Ansprüche, wobei der Fluidbehälter (41, 42) beutelförmig ist.

6. Einrichtung nach einem der vorhergehenden Ansprüche, wobei beabsichtigt ist, dass der Fluidbehälter (41, 42) die Oberfläche (91, 92) des Lebensmittelerzeugnisses (9) berührt und/oder wobei beabsichtigt ist, dass der Fluidbehälter (41, 42) einen Raum zwischen der einen der mindestens zwei Elektroden (31, 32) und der Oberfläche (91, 92) des Lebensmittelerzeugnisses (9) füllt.

7. Einrichtung nach einem der vorhergehenden Ansprüche, wobei ein Abstand zwischen der einen der mindestens zwei Elektroden (31, 32) und der Oberfläche (91, 92) des Lebensmittelerzeugnisses (9) einstellbar ist.

8. Einrichtung nach einem der vorhergehenden Ansprüche, wobei das temperaturabschwächende System einen ersten Fluidbehälter (41) und einen zweiten Fluidbehälter (42) umfasst, wobei beabsichtigt ist, dass der erste Fluidbehälter (41) zwischen einer ersten (31) der mindestens zwei Elektroden (31, 32) und einer ersten Oberfläche (91) des Lebensmittelerzeugnisses (9) angeordnet wird, wobei beabsichtigt ist, dass der zweite Fluidbehälter (42) zwischen einer zweiten (32) der mindestens zwei Elektroden (31, 32) und einer zweiten Oberfläche (92) des Lebensmittelerzeugnisses (9) angeordnet wird,
wobei die erste Elektrode (31) und die zweite Elektrode (32) an entgegengesetzten Seiten der Bearbeitungszone (22) angeordnet sind, wobei beabsichtigt ist, dass zwischen dem ersten Fluidbehälter (41) und dem zweiten Fluidbehälter (42) das Lebensmittelerzeugnis (9) gehalten wird, das in der Bearbeitungszone (22) aufgenommen wird.

9. Einrichtung nach einem der vorhergehenden Ansprüche, wobei eine erste (31) der mindestens zwei Elektroden (31, 32) und eine zweite (32) der mindestens zwei Elektroden (31, 32) an gegenüberliegenden Seiten der Bearbeitungszone (22) angeordnet sind,
wobei die erste Elektrode (31) und die zweite Elektrode (32) voneinander durch einen Abstand getrennt sind, der einstellbar ist.

10. Einrichtung nach einem der vorhergehenden Ansprüche, wobei das Fluid eine relative elektrische Permittivität aufweist, die größer als oder gleich 20 ist.

11. Einrichtung nach einem der vorhergehenden Ansprüche, wobei die Vorrichtung (35) zum Aufbringen einer variablen elektrischen Potentialdifferenz zwischen den Elektroden (31, 32) ausgestaltet ist, um eine variable elektrische Potentialdifferenz mit einer Frequenz von zwischen 10 MHz und 100 MHz aufzubringen.

12. Einrichtung nach einem der vorhergehenden Ansprüche, wobei es sich bei der Einrichtung um eine Einrichtung zum Auftauen eines gefrorenen Lebensmittelerzeugnisses (9) handelt.

13. Verfahren zum Erwärmen eines Lebensmittelerzeugnisses (9), wobei das Lebensmittelerzeugnis (9) einem Erwärmen durch ein elektromagnetisches Feld unterworfen wird, das eine Frequenz von zwischen 1 MHz und 300 MHz aufweist, wobei mindestens eine Oberfläche (91, 92) des Lebensmittelerzeugnisses (9) von dem elektromagnetischen Feld durchsetzt wird, wobei während des Erwärmens des Lebensmittelerzeugnisses (9) Wärmeenergie von der mindestens einen Oberfläche (91, 92) des Lebensmittelerzeugnisses (9) an ein Fluid übertragen wird, das in einem Fluidbehälter (41, 42) zirkuliert, der nahe der oder in Kontakt mit der mindestens einen Oberfläche (91, 92) des Lebensmittelerzeugnisses (9) angeordnet ist,
**dadurch gekennzeichnet, dass**
das Fluid hauptsächlich eine Flüssigkeit umfasst oder eine solche ist, die ausgewählt ist aus einer Gruppe, die Folgendes umfasst: Wasser, demineralisiertes Wasser oder destilliertes Wasser, einen Alkohol, Ethylenglykol, Polyethylenglykol, eine Mischung aus Wasser und Alkohol; eine Mischung aus Wasser und Ethylenglykol; eine Mischung aus Wasser und Polyethylenglykol; eine Mischung aus Alkohol und demineralisiertem Wasser oder destilliertem Wasser, eine Mischung aus Ethylenglykol und demineralisiertem Wasser oder destilliertem Wasser, eine Mischung aus Polyethylenglykol und demineralisiertem Wasser oder destilliertem Wasser,
wobei der mindestens eine Fluidbehälter (41, 42) eine flexible Hülle oder eine flexible Wand (45) umfasst, die einen Innenraum beherbergt und mit einem Zulauf (47) und einem Ablauf (48) für das Fluid bereitgestellt ist.

14. Verfahren nach Anspruch 13, wobei Fluid, das von dem Fluidbehälter (41, 42) entnommen wird, in einer Kühleinheit (40) gekühlt wird und wieder in den Fluidbehälter (41, 42) eingeführt wird und wobei es sich bei dem zu erwärmenden Lebensmittelerzeugnis (9) um ein gefrorenes Lebensmittelerzeugnis (9) handelt.

## Revendications

1. Appareil (1) de chauffage d'aliments, comprenant :
- une surface support (20) ;
- une zone de traitement (22) conçue pour recevoir au moins un produit alimentaire (9) à chauffer ;
- un système chauffant diélectrique radiofréquence ;
- un système modérateur de température servant à modérer la température d'au moins une surface (91, 92) du produit alimentaire (9) au cours du chauffage ;
le système chauffant diélectrique radiofréquence comprenant au moins deux électrodes (31, 32) positionnées au niveau de la zone de traitement (22) et un dispositif (35) servant à appliquer une différence de potentiel électrique variable entre les électrodes (31, 32) avec une fréquence comprise entre 1 MHz et 300 MHz, le système chauffant diélectrique radiofréquence étant destiné, au cours de l'utilisation, à fournir de l'énergie au produit alimentaire (9) dans le but de chauffer ledit produit alimentaire (9) reçu dans la zone de traitement (22) ; le système modérateur de température comprenant au moins un récipient de fluide (41, 42),
**caractérisé en ce que**
le fluide constitue ou comprend majoritairement un liquide choisi dans un groupe comprenant : de l'eau, de l'eau désionisée ou de l'eau distillée, un alcool, de l'éthylène glycol, du polyéthylène glycol, un mélange d'eau et d'alcool ; un mélange d'eau et d'éthylène glycol ; un mélange d'eau et de polyéthylène glycol ; un mélange d'alcool et d'eau désionisée ou d'eau distillée, un mélange d'éthylène glycol et d'eau désionisée ou d'eau distillée, un mélange de polyéthylène glycol et d'eau désionisée ou d'eau distillée,
**en ce que** le récipient de fluide (41, 42) est destiné à être interposé entre l'une desdites au moins deux électrodes (31, 32) et une surface (91, 92) du produit alimentaire (9) reçu dans la zone de traitement (22), ledit au moins un récipient de fluide (41, 42) comprenant une enveloppe souple ou paroi souple (45) qui abrite un espace intérieur et est pourvue d'une entrée (47) et d'une sortie (48) pour le fluide ;
au cours de l'utilisation, l'au moins un récipient de fluide (41, 42) recevant de l'énergie thermique depuis la surface (91, 92) du produit alimentaire (9), le fluide circulant dans l'espace intérieur de l'au moins un récipient de fluide (41, 42) entre l'entrée (47) et la sortie (48) pour éliminer une partie au moins de l'énergie thermique reçue.

2. Appareil selon la revendication 1, dans lequel le système modérateur de température comprend une unité de refroidissement (40) servant à refroidir le fluide, l'unité de refroidissement (40) étant conçue pour recevoir du fluide chauffé et pour fournir du fluide refroidi, l'unité de refroidissement étant reliée à l'entrée (47) et à la sortie (48) de l'au moins un récipient de fluide (41, 42) par des conduits (407, 408), le récipient de fluide (41, 42), les conduits et l'unité de refroidissement (40) faisant partie d'un circuit pour le fluide.

3. Appareil selon la revendication 2, dans lequel l'unité de refroidissement (40) est conçue pour fournir du fluide refroidi à une température comprise entre -10°C et +5°C.

4. Appareil selon l'une des revendications précédentes, dans lequel le système modérateur de température comprend une pompe (49) conçue pour forcer une circulation de fluide dans l'espace intérieur de l'au moins un récipient de fluide (41, 42).

5. Appareil selon l'une des revendications précédentes, dans lequel le récipient de fluide (41, 42) prend la forme d'une poche.

6. Appareil selon l'une des revendications précédentes, dans lequel le récipient de fluide (41, 42) est destiné à entrer au contact de la surface (91, 92) du produit alimentaire (9), et/ou
dans lequel le récipient de fluide (41, 42) est destiné à remplir un espace entre ladite une desdites au moins deux électrodes (31, 32) et la surface (91, 92) du produit alimentaire (9).

7. Appareil selon l'une des revendications précédentes, dans lequel une distance entre ladite une desdites au moins deux électrodes (31, 32) et la surface (91, 92) du produit alimentaire (9) est réglable.

8. Appareil selon l'une des revendications précédentes, dans lequel le système modérateur de température comprend un premier récipient de fluide (41) et un deuxième récipient de fluide (42), le premier récipient de fluide (41) étant destiné à être interposé entre une première (31) desdites au moins deux électrodes (31, 32) et une première surface (91) du produit alimentaire (9), le deuxième récipient de fluide (42) étant destiné à être interposé entre une deuxième (32) desdites au moins deux électrodes (31, 32) et une deuxième surface (92) du produit alimentaire (9),
la première électrode (31) et la deuxième électrode (32) étant positionnées de côtés opposés de la zone de traitement (22), le premier récipient de fluide (41) et le deuxième récipient de fluide (42) étant destinés à maintenir entre eux le produit alimentaire (9) reçu dans la zone de traitement (22).

9. Appareil selon l'une des revendications précédentes, dans lequel une première (31) desdites au moins deux électrodes (31, 32) et une deuxième (32) desdites au moins deux électrodes (31, 32) sont positionnées de côtés opposés de la zone de traitement (22),
la première électrode (31) et la deuxième électrode (32) étant séparées l'une de l'autre d'une distance qui est réglable.

10. Appareil selon l'une des revendications précédentes, dans lequel le fluide présente une permittivité électrique relative supérieure ou égale à 20.

11. Appareil selon l'une des revendications précédentes, dans lequel le dispositif (35) destiné à appliquer une différence de potentiel électrique variable entre les électrodes (31, 32) est conçu pour appliquer une différence de potentiel électrique variable avec une fréquence comprise entre 10 MHz et 100 MHz.

12. Appareil selon l'une des revendications précédentes, lequel appareil est un appareil de décongélation d'un produit alimentaire surgelé (9).

13. Procédé de chauffage d'un produit alimentaire (9), le produit alimentaire (9) étant soumis à un chauffage par un champ électromagnétique d'une fréquence comprise entre 1 MHz et 300 MHz, au moins une surface (91, 92) du produit alimentaire (9) étant traversée par le champ électromagnétique, de l'énergie thermique étant, au cours du chauffage du produit alimentaire (9), transférée de ladite au moins une surface (91, 92) du produit alimentaire (9) à un fluide qui circule à l'intérieur d'un récipient de fluide (41, 42) positionné à proximité ou au contact de l'au moins une surface (91, 92) du produit alimentaire (9),
**caractérisé en ce que**
le fluide constitue ou comprend majoritairement un liquide choisi dans un groupe comprenant : de l'eau, de l'eau désionisée ou de l'eau distillée, un alcool, de l'éthylène glycol, du polyéthylène glycol, un mélange d'eau et d'alcool ; un mélange d'eau et d'éthylène glycol ; un mélange d'eau et de polyéthylène glycol ; un mélange d'alcool et d'eau désionisée ou d'eau distillée, un mélange d'éthylène glycol et d'eau désionisée ou d'eau distillée, un mélange de polyéthylène glycol et d'eau désionisée ou d'eau distillée,
ledit au moins un récipient de fluide (41, 42) comprenant une enveloppe souple ou paroi souple (45) qui abrite un espace intérieur et est pourvue d'une entrée (47) et d'une sortie (48) pour le fluide.

14. Procédé selon la revendication 13, dans lequel du fluide prélevé du récipient de fluide (41, 42) est refroidi dans une unité de refroidissement (40) et réintroduit dans le récipient de fluide (41, 42), et dans lequel le produit alimentaire (9) à soumettre au chauffage est un produit alimentaire surgelé (9).
